# EUROPÄISCHE PATENTANMELDUNG

(11) **EP 1 467 073 A1**
(43) Veröffentlichungstag der Anmeldung: **13.10.2004**
(21) Anmeldenummer: 04007692.9
(22) Anmeldetag: 30.03.2004
(51) Int. Cl.: F01P 11/12, B60K 11/04

(54) **Flurförderzeug mit einem Kühler und einer Filtereinrichtung**

(30) Priorität: 08.04.2003 DE 10316052
(71) Anmelder: STILL GMBH, 22113 Hamburg (DE)
(72) Erfinder: Röhr, Joachim, Dr., 22299 Hamburg (DE)
(74) Vertreter: Lang, Michael

(57) **Zusammenfassung**

Gegenstand der Erfindung ist ein Flurförderzeug mit einem Kühler (1) und einem vor einer Lufteintrittsöffnung des Kühlers (1) angeordneten Filterelement (2). Erfindungsgemäß ist eine Reinigungsvorrichtung für das Filterelement (2) vorgesehen, die ein Mittel (4) zum Bewegen des Filterelements (2) aufweist. Sie ist derart ausgeführt, dass durch das Bewegen des Filterelements (2) ein Reinigen des Filterelements (2) bewirkt wird. Das Mittel (4) zum Bewegen des Filterelements (2) ist derart ausgeführt, dass das Filterelement (2) während des Betriebs des Flurförderzeugs selbsttätig bewegt wird. Vorzugsweise bewirkt das Mittel (4) zum Bewegen des Filterelements (2) ein Klopfen des Filterelements (2) gegen einen vorzugsweise elastischen Anschlag (7).

## Beschreibung

Die Erfindung betrifft ein Flurförderzeug mit einem Kühler und einem vor einer Lufteintrittsöffnung des Kühlers angeordneten Filterelement.

Flurförderzeuge, wie z.B. Gabelstapler, weisen zum Kühlen von verbrennungsmotorischen oder elektrischen Antriebsaggregaten häufig eine Flüssigkeitskühlung auf. Derartige Flüssigkeitskühlungen besitzen einen als Kühler bezeichneten Wärmetauscher, mit dem Wärmeenergie von dem flüssigen Kühlmittel auf die den Kühler durchströmende Umgebungsluft übertragen wird. Für den Einsatz von Flurförderzeugen in staubiger Umgebung ist es bekannt, einen Staubfilter vorzusehen, mit dem die Umgebungsluft vor dem Eintritt in den Kühler gefiltert wird. Damit wird ein Verschmutzen des Kühlers und eine damit einhergehende erhebliche Beeinträchtigung der Kühlleistung des Kühlers vermieden. Um stets einen ausreichenden Luftdurchsatz zu gewährleisten, müssen diese bekannten Staubfilter in regelmäßigen Intervallen gereinigt oder erneuert werden. Dies verringert die Einsatzzeit des Flurförderzeugs erheblich. Zudem muss der Kühler derart angeordnet und ausgebildet sein, dass der Staubfilter leicht zugänglich ist und von einer Bedienoder Wartungsperson in einfacher Weise ausgetauscht oder gereinigt werden kann.

Der vorliegenden Erfindung liegt die Aufgabe zu Grunde, ein Flurförderzeug der eingangs genannten Art zur Verfügung zu stellen, bei dem kein regelmäßiger manueller Zugriff auf das Filterelement erforderlich ist.

Diese Aufgabe wird erfindungsgemäß dadurch gelöst, dass eine Reinigungsvorrichtung für das Filterelement vorgesehen ist, die ein Mittel zum Bewegen des Filterelements aufweist und derart ausgeführt ist, dass durch das Bewegen des Filterelements ein Reinigen des Filterelements bewirkt wird. Während des Reinigungsvorgangs wird das Filterelement derart bewegt, dass der anhaftende Schmutz abfällt. Dies kann beispielsweise durch ein elastisches Verformen, ein Schütteln oder ein Klopfen des Filterelements erfolgen.

Hierbei ist das Mittel zum Bewegen des Filterelements derart ausgeführt ist, dass das Filterelement während des Betriebs des Flurförderzeugs selbsttätig bewegt wird. Das Filterelement wird damit während des Betriebs des Flurförderzeugs fortlaufend gereinigt. Ein Anhalten des Flurförderzeugs ist hierfür nicht erforderlich.

Eine besonders gute Reinigung des Filterelements wird erzielt, wenn das Mittel zum Bewegen des Filterelements ein Klopfen des Filterelements gegen einen vorzugsweise elastischen Anschlag bewirkt. Im Moment des Auftreffens auf den Anschlag erfährt das Filterelement eine große Bremsbeschleunigung. Die Staubpartikel werden hierbei von dem Filterelement weggeschleudert.

Gemäß einer zweckmäßigen Ausgestaltung der Erfindung weist das Mittel zum Bewegen des Filterelements ein rotierendes Antriebsrad auf, das mit dem Filterelement in Wirkverbindung steht. Das rotierende Antriebsrad kann beispielsweise über einen Hebel oder einen Nocken eine klopfende Bewegung des Filterelements bewirken.

Besondere Vorteile ergeben sich, wenn das rotierende Antriebsrad mittels des Kühlluftstroms des Kühlers antreibbar ist. Das Mittel zum Bewegen des Filterelements wird damit genau dann angetrieben, wenn der Kühler in Betrieb ist.

Zweckmäßigerweise ist ein Mittel zum Sammeln und/oder Abführen des während des Reinigens von dem Filterelement abfallenden Schmutzes vorgesehen. Damit wird eine Verschmutzung, beispielsweise des Motorraumes des Flurförderzeugs vermieden.

Gemäß einer besonders einfachen Ausführungsform ist das Mittel zum Sammeln und/oder Abführen des während des Reinigens von dem Filterelement abfallenden Schmutzes von einem unter dem Filterelement angeordneten Behälter gebildet. Dieser Behälter ist regelmäßig zu entleeren, was gemeinsam mit anderen Wartungsarbeiten erfolgen kann. Zusätzliche Wartungsstopps wegen der Reinigungsvorrichtung des Filterelements sind nicht erforderlich.

Weitere Vorteile und Einzelheiten der Erfindung werden anhand des in der schematischen Figur dargestellten Ausführungsbeispiels näher erläutert.

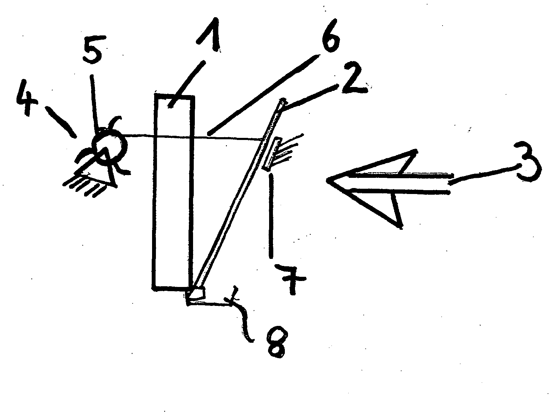

Die Figur zeigt einen Kühler 1 eines Flurförderzeugs mit einem vorgeschalteten Filterelement 2. Die den Kühler 1 in Richtung 3 anströmende Kühlluft wird dabei mittels des Filterelements 2 von Staub und anderen Partikeln befreit, bevor sie in den Kühler 1 eintritt.

Um ein Zusetzen des Filterelements zu verhindern, ist erfindungsgemäß eine Reinigungsvorrichtung für das Filterelement 2 vorgesehen, die ein Mittel 4 zum Bewegen des Filterelements 2 umfasst. Im vorliegenden Ausführungsbeispiel weist das Mittel 4 zum Bewegen des Filterelements 2 ein Antriebsrad 5 und eine das Antriebsrad 5 mit dem Filterelement 2 verbindende Stange 6 auf. Durch Drehen des Antriebsrads 5 wird das Filterelement 2 mittels der Stange 6 gegen einen elastischen Anschlag 7 geklopft. In Folge dieses Klopfens fällt der an dem Filterelement 2 anhaftende Schmutz ab, der sich dann in dem unter dem Filterelement 2 angeordneten, im vorliegenden Ausführungsbeispiel als Sammelschiene ausgeführten Behälter 8 sammelt. Der Antrieb des Antriebsrads 5 erfolgt mittels des den Kühler 1 durchströmenden Luftstroms. Zu diesem Zweck ist das Antriebsrad mit mehreren Propellerflügeln ausgestattet.

## Patentansprüche

1. Flurförderzeug mit einem Kühler (1) und einem vor einer Lufteintrittsöffnung des Kühlers (1) angeordneten Filterelement (2), **dadurch gekennzeichnet, dass** eine Reinigungsvorrichtung für das Filterelement (2) vorgesehen ist, die ein Mittel (4) zum Bewegen des Filterelements (2) aufweist und derart ausgeführt ist, dass durch das Bewegen des Filterelements (2) ein Reinigen des Filterelements (2) bewirkt wird.

2. Flurförderzeug nach Anspruch 1, **dadurch gekennzeichnet, dass** das Mittel (4) zum Bewegen des Filterelements (2) derart ausgeführt ist, dass das Filterelement (2) während des Betriebs des Flurförderzeugs selbsttätig bewegt wird.

3. Flurförderzeug nach Anspruch 1 oder 2, **dadurch gekennzeichnet, dass** das Mittel (4) zum Bewegen des Filterelements (2) ein Klopfen des Filterelements (2) gegen einen vorzugsweise elastischen Anschlag (7) bewirkt.

4. Flurförderzeug nach einem der Ansprüche 1 bis 3, **dadurch gekennzeichnet, dass** das Mittel (4) zum Bewegen des Filterelements (2) ein rotierendes Antriebsrad (5) aufweist, das mit dem Filterelement (2) in Wirkverbindung steht.

5. Flurförderzeug nach Anspruch 4, **dadurch gekennzeichnet, dass** das rotierende Antriebsrad (5) mittels des Kühlluftstroms des Kühlers (1) antreibbar ist.

6. Flurförderzeug nach einem der Ansprüche 1 bis 5, **dadurch gekennzeichnet, dass** ein Mittel zum Sammeln und/oder Abführen des während des Reinigens von dem Filterelement (2) abfallenden Schmutzes vorgesehen ist.

7. Flurförderzeug nach einem der Ansprüche 1 bis 6, **dadurch gekennzeichnet, dass** das Mittel zum Sammeln und/oder Abführen des während des Reinigens von dem Filterelement (2) abfallenden Schmutzes von einem unter dem Filterelement (2) angeordneten Behälter (8) gebildet ist.
